# EUROPEAN PATENT APPLICATION

(11) **EP 3 091 064 A1**
(43) Date of publication of application: **09.11.2016**
(21) Application number: 15001333.2
(22) Date of filing: 05.05.2015
(51) Int. Cl.: C10L 5/44, C10L 9/08

(54) **DEVICE AND METHOD FOR REDUCING LOSS OF DRY MATTER**

(71) Applicant: Linde Aktiengesellschaft, 80331 München (DE)
(72) Inventor: Nyman, Fredrik, 112 67 Stockholm (SE)
(74) Representative: Gellner, Bernd

(57) **Abstract**

A method of preventing dry matter and microbial losses during storing of wet bio-fuel material or forage material, characterised in introducing an inert gas (G) so that it reaches into a centre (2) of a stack (1) of stored material. A device (6) for preventing dry matter and microbial losses during storing of wet bio-fuel material or forage material, characterised in that it has at least one outlet for an inert gas covered in such a way that material of the stack cannot enter the at least one outlet and that it is positionable in or under a stack so that the inert gas reaches the centre of the stack.

## Description

The present invention concerns limiting dry matter losses and microbial activity during storing of wet and solid bio-fuels such as wooden chips, bark and twigs. It could also be used in wet storage of forage. Wet bio-fuels have a water content of around 20% or more. Wet-stored forage typically has a water content of around 20% or more.

### Background

During storing of wet wooden fuel the loss of dry matter is significant due to decomposition and oxidation of hydrocarbons and microbial activity. The reaction rates are temperature dependent and mainly exothermic causing a rapid temperature increase at the centre of the stack. The thermal effect transports reaction products such as volatile hydrocarbons, carbon monoxide, carbon dioxide and water vapour to the top of the stack where it is released or condensate on the cooler surface. At the same time fresh air feeds the reactions from the lower part of the stack. Because of the exothermic character of the reaction, it is self-enforcing, potentially leading to high core stack temperatures.

Consequently this leads to significant loss of dry matter. Approximately 1-5% of the dry weight is lost during the first 5 days of storing and up to 15% in 3-6 months. This also leads to operational problems for the boiler being fed with the bio-fuel and off-gas cleaning due to inhomogeneous fuel quality (concerning temperature, heating value and water content). Further the microbial activity and reaction products cause health issues and increased handling. Additionally, the risk of fire increases. The temperature increase and transport of reaction products can cause stack fires with risk of damaging the fuel handling equipment and cause production losses.

### Summary of the invention

The present invention concerns limiting dry matter losses and microbial activity during storing of wet bio-fuel material or forage material by means of introducing an inert gas to the stack of wet bio-fuel/forage material. Wet bio-fuel and forage material comprises at least around 20% water. The invention also concerns a device for introducing an inert gas to the stack of wet material. An inert gas is a gas that do not react and thus inhibit oxidation by replacing oxygen.

By injecting the inert gas below or at the centre of the stack, the loss of dry matter can be minimised by preventing the oxidation of hydrocarbons at the centre of the stack. Less oxidation leads to less temperature increase and the thermal effect that transport fresh air that feeds the reaction will be reduced. The injection is continuous. Thus the inert gas replaces air comprising oxygen in at least the centre of the stack.

Thus the temperature driven decomposition and microbial activity also will be reduced resulting in less material losses and related operational and handling problems for the boiler and fuel handling system. Additionally health problems for personnel will also decrease due to decreased microbial activity.

According to one embodiment of the method the inert gas is introduced in an amount enough for inhibiting air comprising oxygen to enter at least the centre of the stack. According to a further embodiment the inert gas is introduced directly to the centre of the stack. According to another embodiment the inert gas is introduced from underneath the stack upwards.

Preferably the introduced inert gas has a feeding pressure of 3-15 bar, preferably 4-10 bar.

According to an embodiment of the method it concerns introducing the inert gas with a decreasing rate, initially high and then decreasing, especially after the first five days. For example the inert gas may be introduced at a rate of 3-10 times the volume of the stack per day during the first 5 days of storing, preferably around 5 times the volume of the stack per day.

Thereafter the inert gas is preferably introduced at a rate of 2-3 times the volume of the stack per day the following 3 weeks and thereafter 1 time the volume of the stack per day.

According to another embodiment of the method it concerns introducing the inert gas at a rate regulated by a feedback loop sensing the temperature of the centre of the stack. The inert gas may be for example, argon, CO2 or, preferably, N2. It is preferably in a cold state when introduced. If CO2 is used it may be provided in the form of carbon dioxide snow or liquid.

According to one embodiment of the invention a device for preventing dry matter losses and microbial activity during storing of wet bio-fuel material or forage material is provided. The device has at least one outlet for an inert gas covered in such a way that material of the stack cannot enter the at least one outlet and that it is positionable in or under a stack so that the inert gas reaches the centre of the stack.

Preferably the device is connected to a gas source via tubing and the gas source is providing a gas pressure of 3-15 bar, preferably 4-10 bar.

The device may be pushable into the centre of the stack or provided underneath the stack, preferably below a support surface for the stack. It is also conceivable to provide the device in an axle of a transporting screw.

According to the invention a method of storing wet bio-fuel or wet forage material is provided, comprising the steps
providing a surface for supporting the material
providing a recess for a device
arranging the device in the recess
dumping wet material for storage onto the surface and
introducing inert gas via the device through the stack.

Thus, the injection of an inert gas leads to the following improvements. By reducing the material losses more energy can be produced in the boiler for the same amount of fuel input. Due to the overall increased heating value the boiler capacity in terms of power capacity is also increased. Additionally, a more homogeneous fuel quality also leads to less operational problems and improved possibility for process optimisation both for the fuel handling system, the boiler and the off-gas cleaning system. Further the working environment around the fuel handling system is improved due to less microbial activity. Corrosion problems with the fuel handling system can be reduced and, finally, preventing the heat generation and drying of the centre of the stack reduces the risk of costly fires.

### Detailed description of the invention

The present invention is described under referral to the appended drawings in which Fig. 1 shows a stack of wet bio-fuel. Fig. 2 shows a device having outlets for inert gas which is pushable into a centre of the stack. Fig. 3 shows a device having outlets for inert gas which is provided in a recess in a storing surface. Fig. 4 shows a device provided in an axle of a transporting screw.

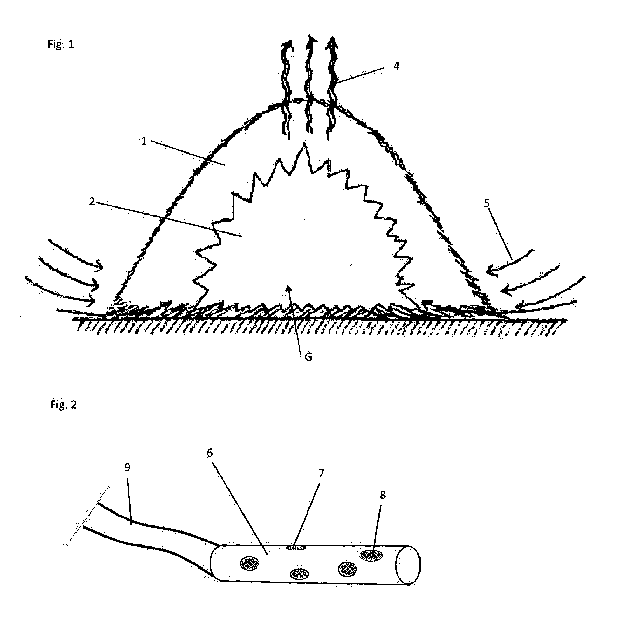

In Fig. 1 it is shown how a centre 2 of a stack 1 of wet bio-fuels has an elevated temperature, for example 50-70 °C, due to decomposition and oxidation of hydrocarbons and microbial activity. The reaction rates are temperature dependent and mainly exothermic causing a rapid temperature increase at the centre of the stack. The thermal effect transport reaction products such as volatile hydrocarbons, carbon monoxide, carbon dioxide and water vapour to the top of the stack where it is released or condensate on the cooler surface, see Fig. 1 where warm air leaves 4. At the same time fresh air 5 feeds the reactions from the lower part of the stack, see Fig. 1 where air being sucked into the stack 1 along its lower portions.

The main feature of the present invention is to introduce an inert gas G to the centre 2 of the stack 1 in order to slow down and prevent oxidation, decomposition and microbial activity. The inert gas G substitute air comprising oxygen and thus the temperature will decrease. When the temperature decreases the decomposition and microbial activity decreases, too. Additionally the risk of fire also decreases.

The wet bio-fuel or wet forage may be stored on the ground, in a bam or the like or in a silo. In a silo there is less problem with fresh air comprising oxygen entering the stack. But for example when storing wet forage in silos an uncontrolled decomposition usually takes place, wherefore forage usually is rolled up and wrapped in plastic film on the field. In such a small volume the decomposition is under control. The present invention would make it possible to store wet forage in a silo by spreading inert gas from underneath and upwards in the stack in the silo and thus control the oxidation of the oxygen comprised within the wet forage.

In Fig. 2 a device 6 is shown having outlets 7 for the inert gas and a connecting tube, hose 9 or similar for connection to an inert gas source. The source may feed the device with an inert gas of 3-15 bar of pressure, preferably 4-10 bar. The outlets 7 are protected from letting the bio-fuel material, such as wooden chips, into the outlets 7. This could for example be made with nets 8 or the like. Also the pressure of the inert gas will keep the outlets 7 free of bio-fuel material. The device in Fig. 2 is pushable into the centre 2 of a stack 1 in order to provide the inert gas G at the most important position directly.

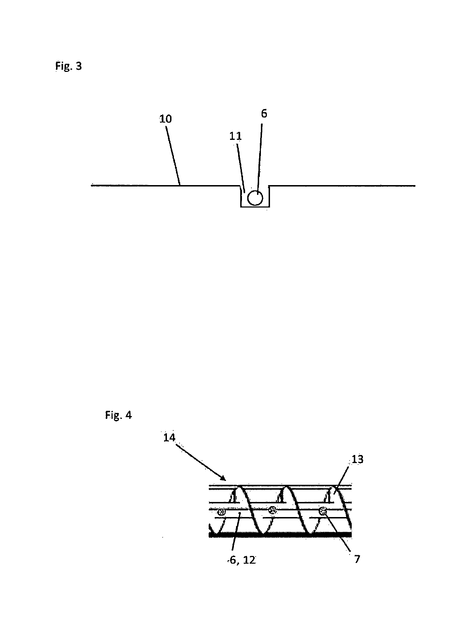

In Fig. 3 another embodiment of the device is shown where the device 6 is provided underneath the stack blowing the inert gas G from below towards the centre of the stack. The device 6 is preferably arranged in a recess 11 so that the device 6 is situated below a surface 10 where the wet material is stored. Thus it is possible to lift up the wet material with an excavator, for example, or move the material with a scraper or transporting screw along the surface 10. The device 6 could be a hose provided with holes 7 in the portion provided underneath the stack 1.

In Fig. 4 a further embodiment of the device 6 is shown where it is provided in an axle 12 in a transporting screw 14. The axle 12 is hollow and has outlets 7 along its periphery between the screw blades 13. A swivel coupling (not shown) may be used at the connection between the feeding pipe or hose and the transporting screw.

The inert gas may be for example, argon, CO2 or, preferably, N2. It is preferably fed cold. For example, carbon dioxide snow or carbon dioxide in liquid state could be used.

## Claims

1. A method of preventing dry matter losses and microbial activity during storing of wet bio-fuel material or forage material, **characterised in** introducing an inert gas (G) so that it reaches into a centre (2) of a stack (1) of stored material.

2. The method according to claim 1, **characterised in** introducing the inert gas (G) in an amount enough for inhibiting air comprising oxygen to enter at least the centre (2) of the stack (1).

3. The method according to any of the preceding claims, **characterised in** introducing the inert gas (G) directly to the centre (2) of the stack (1).

4. The method according to any of the preceding claims, **characterised in** introducing the inert gas (G) from underneath the stack (1) upwards.

5. The method according to any of the preceding claims, **characterised in** introducing inert gas (G) having a feeding pressure of 3-15 bar, preferably 4-10 bar.

6. The method according to any of the preceding claims, **characterised in** introducing the inert gas (G) at a decreasing rate.

7. The method according to any of the preceding claims, **characterised in** introducing the inert gas (G) at a rate of 3-10 times the volume of the stack (1) per day during the first 5 days of storing, preferably around 5 times the volume of the stack (1) per day.

8. The method according to claim 7, **characterised in** introducing the inert gas (G) at a rate of 2-3 times the volume of the stack (1) per day the following 3 weeks and thereafter 1 time the volume of the stack (1) per day.

9. The method according to any of the preceding claims, **characterised in** introducing the inert gas (G) at a rate regulated by a feedback loop sensing the temperature of the centre (2) of the stack (1).

10. The method according to any of the preceding claims, **characterised in that** the inert gas is Ar, N2, CO2, preferably provided as carbon dioxide ice, or a mixture thereof.

11. The method according to any of the preceding claims, **characterised in that** the inert gas is cold when introduced.

12. The method according to any of the preceding claims, **characterised in that** the water content of the material in the stack (1) is at least around 20% at the start of the storing.

13. A device (6) for preventing dry matter losses and microbial activity during storing of wet bio-fuel material or forage material, **characterised in that** it has at least one outlet (7) for an inert gas (G) covered in such a way that material of the stack (1) cannot enter the at least one outlet (7) and that it is positionable in or under a stack (1) so that the inert gas (G) reaches a centre (2) of the stack (1).

14. The device according to claim 13, **characterised in that** the device (6) is pushable into the centre (2) of the stack (1).

15. The device according to claim 13 or 14, **characterised in that** the device (6) is provided in an axle (12) of a transporting screw (14).
